# EUROPÄISCHE PATENTSCHRIFT

(11) **EP 2 101 998 B1**
(45) Veröffentlichungstag und Bekanntmachung des Hinweises auf die Patenterteilung: **16.01.2013**
(21) Anmeldenummer: 07822186.8
(22) Anmeldetag: 05.11.2007
(51) Int. Cl.: B32B 27/00

(54) **THERMOPLASTISCHE FOLIE MIT GESCHÄUMTER DECKFOLIE**
THERMOPLASTIC FILM COMPRISING AN EXPANDED COVERING SHEET
FILM THERMOPLASTIQUE PRÉSENTANT UNE FEUILLE DE RECOUVREMENT EXPANSÉE

(30) Priorität: 16.12.2006 DE 102006059590
(43) Veröffentlichungstag der Anmeldung: 23.09.2009
(73) Patentinhaber: Benecke-Kaliko AG, 30419 Hannover (DE)
(72) Erfinder: BÜHRING, Jürgen, 30900 Wedemark (DE); MARQUARDT, Jürgen, 79014 Freiburg (DE)
(74) Vertreter: Finger, Karsten
(86) Internationale Anmeldenummer: PCT/EP2007/061857
(87) Internationale Veröffentlichungsnummer: WO 2008/074563

(56) Entgegenhaltungen:
- EP-A- 0 623 491

## Beschreibung

Die Erfindung betrifft eine thermoplastische Folie mit einer geprägten dreidimensional strukturierten Oberfläche in ihrer äußeren Deckschicht, insbesondere für die Innenverkleidung von Kraftfahrzeugen, wobei die Folie in einem formgebenden Verarbeitungsschritt auf einen der Bauteilform entsprechenden Träger aufgebracht wird und dadurch ihre Bauteilform erhält, wobei die Folie auf ihrer unteren und dem Träger zugewandten Unterseite als Schaumfolie ausgebildet ist

Thermoplastische Formteile, Formfolien oder - häute für die Innenverkleidung von Kraftfahrzeugen sind weithin bekannt und werden z. B. verwendet für die Innenverkleidung in Fahrzeugen, also als Überzug von Armaturenbrettern, Türeinsätzen, Sonnenblenden etc. eingesetzt. Solche Formteile bestehen üblicherweise aus einer mehrschichtigen unterschäumten Kunststoff-Folie, die auf ihrer Oberseite eine dreidimensional strukturierte, geprägte Oberfläche aufweist, nämlich eine so genannte Musterung oder Narbung in verschiedensten Formen und Ausführungen.

Die Formteile oder Formfolien bestehen aus einer relativ harten Oberschicht hoher Dichte, nämlich der Deck- oder Dekorschicht, die mit der geprägten oder eingeformten Oberfläche versehen ist, und aus einer auf der Unterseite auflaminierten / aufgeklebten Schaumschicht niedriger Dichte als Unterschicht, die eine ansprechende Haptik, d.h. eine angenehm "weiche" Griffigkeit des Bezuges bereitstellt. Dabei ist die harten Oberschicht auch als "Kompaktfolie" bekannt.

Sowohl die Oberschicht als auch die Unterschicht der Formteile /Formfolien können dabei aus mehreren Lagen unterschiedlicher oder unterschiedlich eingestellter Materialien bestehen, also etwa aus Kunststoffen wie PVC (Polyvinylchlorid), PP (Polypropylen), TPO (Polyolefin) etc. oder einer Kombination aus solchen oder ähnlichen Materialien.

Im Stand der Technik sind zur Herstellung solcher Formhäute verschiedene Verfahren bekannt, zum Beispiel Walzverfahren zur Herstellung von "endlosen" Folienbahnen oder auch Verfahren zur Herstellung von werkzeugfallenden einzelnen Formhäuten.

Im Weiteren sind jedoch die Walzverfahren angesprochen, bei denen eine thermoplastische Folie durch ein Prägeverfahren, also etwa mit Hilfe einer Prägewalze mit einer Oberflächenstruktur versehen wird.

Für das nachfolgende Aufbringen eines solchen Formteiles bzw. einer solchen Formfolie auf einen Armaturenbrett-Träger oder auf ein vorgefertigtes, z.B. aus faserverstärkter Pappe hergestelltes Trägerteil für einen Seitentür-Einsatz, kennt man neben dem Tiefziehen eine Reihe weiterer Umformverfahren, wie etwa Drück- oder Pressverfahren, bei denen die Folie gegen Formen bzw. gegen die genannten Träger gepresst wird und ihre Bauteilform erhält.

Die EP 1538175 A1 offenbart hierzu eine Dekorfolie für z.B. Armaturenbretter, die als ein mehrlagiger Formkörper mit einer Oberfolie ausgebildet ist. Die Oberfolie enthält mindestens partiell vernetzte polymere Materialien, beispielsweise auf der Basis von Polyolefinen und ist mit einer geschäumten Unterfolie mit bestimmtem Gelgehalt und festgelegter Dichte versehen. Die Dekorfolie wird für die bei der Durchführung eines nachfolgenden Tiefziehprozesses erforderliche Narbstabilität mit Elektronenstrahlen behandelt, die die Folie bzw. den Formkörper weiter vernetzen und damit die notwendige Stabilität geben.

Eine solche Folie, d.h. ein solcher Formkörper besteht, wie oben bereits dargestellt, also aus einem Verbund von mehreren Schichten, wodurch ein relativ hoher Materialverbrauch vorgegeben ist. Auch ist bei solchen Formkörpern, bei denen die Oberfolie relativ stark vernetzt und auch die geschäumte Unterfolie ziemlich stabil ausgebildet ist, der Einsatz mit den in heutigen Fahrzeugen serienmäßig vorhandenen Airbag-Auslösegeräten nur dann möglich, wenn die Folie, die ja z.B. das gesamte Armaturenbrett und damit auch den Auslösemechanismus/ den Airbag bedeckt, zum Aufreißen entlang einer Naht geschwächt wird. Diese Schwächung erfolgt beispielsweise durch eine Laserstrahlbehandlung, bei dem ein Laserstrahl einen Teil der Foliendicke verbrennt bzw. schneidet. Nachteilig dabei ist, dass bei bestimmten Kunststoffen die rückseitige und durch den Laserstrahl erzeugte Materialschwächung im Lauf der Zeit auch auf der Außenseite durch einen Material-Rückfall sichtbar werden kann. Da im Bereich des Automobilinterieurs ein starker Trend zur Verbesserung der Qualitätsanmutung zu beobachten ist, sind solche Unregelmäßigkeiten immer weniger akzeptabel.

Die DE 196 53 608 B4 offenbart eine Kunststoff-Folie mit einem angenehmen textilen Griff, die für Kleidungstücke oder Haushaltswaren aus Kunststoff geeignet ist. Die Oberfläche der Kunststoff-Folie weist eine feinzellige Schaumstruktur auf, die ggf. als ein- oder beidseitige Schaumfolie auf eine Trägerfolie oder -struktur aufgebracht sein kann. Die geschäumte Schicht bzw. Folie wird dabei aus verschiedenen Rohstoffen oder Rohstoffmischungen unter Zugabe unterschiedlicher Treibmittel und Hilfsstoffe hergestellt. Eine weitere Oberflächenbearbeitung im Sinne eines Dekors oder einer Prägung lässt sich dabei jedoch nur schwerlich erreichen, ohne den haptischen Eindruck des "angenehm-textilen" wieder zu zerstören, so dass eine solche Folie für z.B. den Bezug von Armaturenbrettern wenig geeignet ist.

Der Erfindung lag also die Aufgabe zugrunde, eine thermoplastische Folie bereitzustellen, die bei niedrigem Materialverbrauch ohne Qualitätsverlust herstellbar ist, eine hochwertigen Anmutung der Oberfläche besitzt und auch ohne umfangreiche Zusatzbearbeitung im Bereich von Airbag-Auslösern einsetzbar ist.

Gelöst wird diese Aufgabe durch die Merkmale des Hauptanspruchs. Weitere vorteilhafte Ausbildungen sind in den Unteransprüchen offenbart. Ebenso wird ein zur Herstellung einer solchen Folie besonders geeignetes Verfahren offenbart.

Dabei ist die obere Deckschicht einer solchen Folie als geschäumte Schicht ausgebildet und weist eine über ihre Schichtdicke unterschiedliche und zur Oberfläche ansteigende, nämlich größer werdende Schaumdichte auf. Durch eine solcherart gezielte Aufschäumung verringert sich bei gleich bleibender Qualität und Eignung zu Weiterverarbeitung der Anteil der Materialkosten gravierend im Vergleich zu den im Stand der Technik vorhandenen so genannten "Kompaktfolien", die als Deckfolien bzw. als Deckschicht bei solchen Formteilen eingesetzt werden.

Eine vorteilhafte Weiterbildung besteht darin, dass die Folie einen einschichtigen Aufbau in Form einer geschäumten Schicht aufweist und die geschäumte Schicht eine über ihre Schichtdicke unterschiedliche und von ihrer Unterseite zur Deckschicht-Oberfläche ansteigende Schaumdichte aufweist. Mit einer solchen Ausbildung werden z.B. die Fertigungsschritte eingespart, die zur Verbindung mehrerer unterschiedlicher Schichten der Folie erforderlich wären. Eine weitere Erniedrigung der Herstellungskosten wäre die Folge.

Eine weitere vorteilhafte Weiterbildung besteht darin, dass die Folie aus einer die äußere Deckschicht beinhaltenden Oberfolie und einer geschäumten und auflaminierten Unterfolie besteht, wobei die Oberfolie als geschäumte Schicht ausgebildet ist und eine über ihre Schichtdicke unterschiedliche und zur Deckschicht-Oberfläche ansteigende Schaumdichte aufweist. Durch eine solche Ausbildung lässt sich eine genaue Einstellung und Anpassung der Eigenschaften der jeweiligen Schicht erreichen.

Natürlich ist es denkbar, abhängig vom Anwendungsgebiet der Folie, auch weitere Funktionsschichten / Trägerschichten zu unterlegen oder zu integrieren.

Eine weitere vorteilhafte Weiterbildung besteht darin, dass die Folie aus einem thermoplastischen Olefin (TPO) oder einer Polyolefinmischung besteht, also aus vernetzten thermoplastischen Elastomer. Eine solche Kunststoff-Folie ist aufgrund ihres Festigkeitsniveaus besonders geeignet für den Einsatz im Bereich von Airbag-Auslösegeräten. Auf eine Schwächung durch Laserschneiden kann dabei verzichtet werden, da die TPO Folie in der Erfindungsgemäßen Ausbildung genügend Festigkeit besitzt, um im üblichen Betrieb eine hochwertige Anmutung bereitzustellen, durch die Schäumung aber ohne Probleme bei ausgelöstem Airbag-Generator aufreißt und ein Aufblasen des Airbag ermöglicht. Mangels Erfordernis für einen Laserschnitt kann dann auch kein sichtbarer Nahtrückfall im Material entstehen.

Ebenfalls in diesem Sinne vorteilhaft ist eine Ausbildung, bei der die Folie Polyethylen enthält, vorzugsweise Polyethylen mit einem Schmelzflussindex (Melt Flow Index - MFI) von mehr als 2,0 g / 10 Minuten (bei 190°C / 2,16 Kg). Hierdurch erhält man zudem eine besonders gute Zellwandfestigkeit des geschäumten Folienmaterials.

Eine weitere vorteilhafte Weiterbildung besteht darin, dass die Folie aus Polypropylen besteht. Hierdurch ergibt sich eine besonders gute Deckschicht-Oberfläche der Folie mit guter Prägbarkeit

Eine weitere vorteilhafte Weiterbildung besteht darin, dass die Dichte der Deckschicht-Oberfläche vor dem Prägen 100 bis 600 g/l beträgt, vorzugsweise 250 bis 400 g/l. Dadurch erreicht man ein ausgewogenes Verhältnis zwischen Materialeinsparung und erforderlicher Festigkeit. Kompaktfolien herkömmlicher Art weisen dagegen Dichten von bis zu 950 g/l auf, sind also durch höheren Materialeinsatz deutlich schwerer.

Eine weitere vorteilhafte Weiterbildung besteht darin, dass der Gelgehalt der Deckschicht-Oberfläche 20 bis 80 %, vorzugsweise 20 bis 60 % beträgt. Damit erreicht man eine ausreichende Vergleichmäßigung der Dehnungen des Materials auch bei stark verformten Bauteilen, wie beispielsweise bei Abdeckungen für den Kardantunnel eines PKW. Ein besonders geeigneter Gelgehalt in diesem Sinne beträgt 30 bis 50 %.

Eine weitere vorteilhafte Weiterbildung besteht darin, dass die Deckschicht-Oberfläche vor dem Prägeschritt geschlossen-porig ausgebildet ist. Dies ist eine weitere Maßnahme zur Verbesserung der Prägbarkeit als auch der Lackierfähigkeit.

Ein besonders geeignetes Verfahren zur Herstellung einer solchen thermoplastischen Folie besteht darin, dass das Aufschäumen der Folie oder der Folienschichten, insbesondere der Oberfolie, durch die Zugabe von Treibmitteln und Vernetzungsmitteln während der Extrusion der Folie oder der Folienschichten erfolgt. Dadurch lässt sich auf einfache Weise bereits beim Produktionsprozess eine ausreichend genaue Einstellung der Aufschäumung /Schaumigkeit der Folie erreichen, ohne dass weitere separate Schäumungsverfahren angeschlossen werden müssten.

Eine vorteilhafte Ausbildung des Verfahrens besteht darin, dass - entweder additiv oder ausschließlich - die Erhöhung der Schaumdichte in der Deckschicht-Oberfläche während des Prägeschrittes erfolgt. Damit lassen sich eine zusätzliche mechanische Verfeinerung der Dichteeinstellung und auch eine genaue Dickeneinstellung erreichen.

Eine weitere vorteilhafte Ausbildung des Verfahrens besteht bei der Herstellung einer aus Oberfolie und Unterfolie bestehenden thermoplastischen Folie darin, dass das Aufschäumen der Oberfolie durch die Zugabe von Treibmitteln und Vernetzungsmitteln während der Extrusion der Oberfolie und das Auflaminieren der Oberfolie auf die Unterfolie während des Prägeschrittes erfolgt. Damit erreicht man innerhalb eines Verfahrensschrittes sowohl eine mechanische Verfeinerung der Dichte- und Dickeneinstellung als auch den gleichzeitig erfolgenden Verbundaufbau.

Eine weitere vorteilhafte Ausbildung des Verfahrens besteht darin, dass die Unterfolie während des Auflaminierens der Oberfolie bereits in angeschäumter Form vorliegt. Dadurch wird die Verwendung bereits vorgefertigter Unterfolien mit genau eingestellten chemischen und mechanischen Eigenschaften als preiswerter Massenware möglich.

Im übrigen weist eine solche ebenso strukturstabile wie gleichmäßig nachgiebige Folie eine für Tiefziehprozesse gut geeigneten Narbe auf. Eine solche Folie lässt sich also leicht auf einem dreidimensionalem Bauteil applizieren, also etwa bei einem Tiefziehen in ein Formwerkzeug oder beim Spannen über einen festen Träger oder Grundkörper. Gleichzeitig verringert sich bei gleich bleibender Qualität und Eignung zur Weiterverarbeitung der Anteil der Materialkosten gravierend im Vergleich zu den im Stand der Technik vorhandenen so genannten "Kompaktfolien", die üblicherweise als Deckfolien bzw. als Deckschicht bei solchen Formteilen eingesetzt werden.

Natürlich ist dabei die obere Deckschicht einer solchen Folie so ausgebildet, dass sie vor dem Tiefziehen gut geprägt werden kann und eine gute Lackierfähigkeit aufweist.

Anhand eines Ausführungsbeispieles soll die Erfindung näher erläutert werden. Es zeigen
- Fig. 1: eine aus einer Oberfolie und einer Unterfolie bestehende erfindungsgemäße Folie
- Fig. 2: eine einschichtige erfindungsgemäße Folie

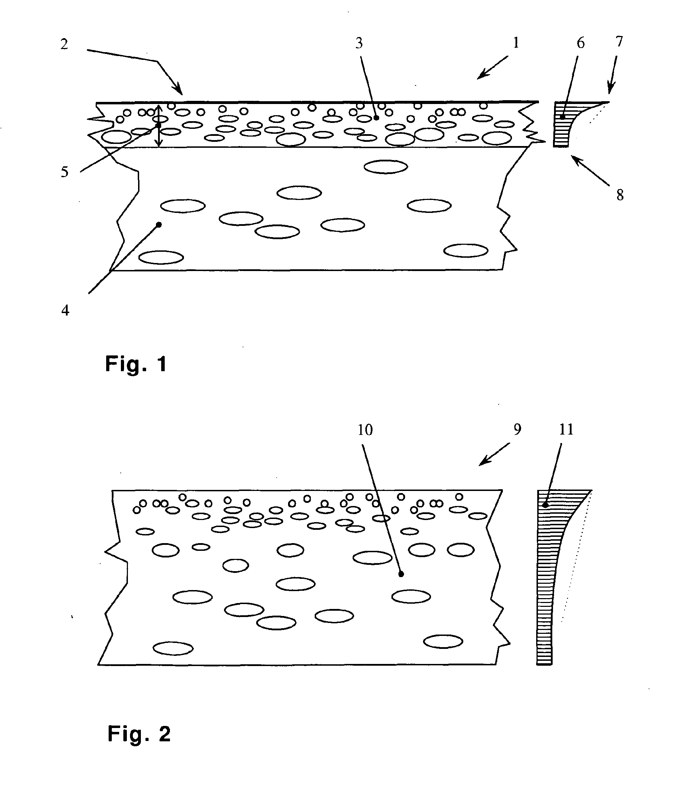

Die Fig. 1 zeigt den Aufbau einer mehrschichtigen aus einer Oberfolie und einer Unterfolie bestehenden thermoplastischen Folie 1 für die Verkleidung eines Kfz-Armaturenbrettes. Die thermoplastische Folie 1 ist mit einer geprägten dreidimensional strukturierten Oberfläche 2 auf ihrer äußeren Deckschicht der Oberfolie 3 versehen, also mit einer durch Walzprägung außen aufgeprägten Narbe. Die Folie 1 ist auf ihrer unteren und dem Träger zugewandten Unterseite als Schaumfolie, nämlich hier als geschäumte Unterfolie 4 ausgebildet. Die Unterfolie 4 ist hierbei als vorgefertigte Schaumfolie auf die Oberfolie auflaminiert und weist eine über ihre Dicke gleichmäßige Schaumdichte von 110 g/l auf.

Auch die Oberfolie 3 ist als geschäumte Schicht ausgebildet und weist eine über ihre Schichtdicke 5 unterschiedliche und zur Deckschicht-Oberfläche ansteigende Schaumdichte auf, wie sie durch den Dichteverlauf im zugehörigen Dichtediagramm 6 dargestellt ist.

Die Oberfolie 3 wurde hier mit einer seriennahen PP-Schaumrezeptur hergestellt, die zunächst und vor der Prägung eine Dichte von 120g/l aufwies. Der Gelgehalt war auf 50 % eingestellt und die Foliendicke lag bei 2,0 mm vor der Prägung und Laminierung der Unterfolie 4.

Nach dem Prägen und der gleichzeitig erfolgten Laminierung der Unterfolie 4 ist die Dichtestruktur der Oberfolie so verändert, wie in dem zugehörigen Dichtediagramm 6 gezeigt, nämlich auf eine erhöhte Schaumdichte 7 von 250 g/l an der äußeren Deckschicht der Oberfolie 3, während etwa vom Verbindungsbereich der Oberfolie 3 zur Unterfolie 4 bis in den mittleren Bereich der Oberfolie annähernd die ursprüngliche Schaumdichte 8 von 120 g/l erhalten blieb. Die Schichtdicke 5 der Oberfolie liegt nach dem Prägen und Laminieren bei ca. 1,0 mm. Die Folie war gut tiefziehfähig und die Narbstabilität ausreichend hoch.

Die Fig. 2 zeigt rein qualitativ eine thermoplastische Folie 9 mit einem einschichtigen Aufbau in Form einer einzigen geschäumten Schicht 10. Die geschäumte Schicht 10 weist eine über ihre Schichtdicke unterschiedliche und von ihrer Unterseite zur Deckschicht-Oberfläche ansteigende Schaumdichte auf, wie der Dichteverlauf im zugehörigen Dichtediagramm 11 ersichtlich. Die hier vorhandene Dichte-Änderung ist durch die Zugabe von Treibmitteln und Vernetzungsmitteln während der Extrusion der Folie erfolgt.

### Bezugszeichenliste

### (Teil der Beschreibung)

- 1: Thermoplastische Folie
- 2: Dreidimensional strukturierte Oberfläche
- 3: Oberfo lie
- 4: Unterfolie
- 5: Schichtdicke
- 6: Dichtediagramm
- 7: Erhöhte Schaumdichte
- 8: Ursprüngliche Schaumdichte
- 9: Thermoplastische Folie
- 10: Geschäumte Schicht
- 11: Dichtediagramm

## Patentansprüche

1. Thermoplastische Folie (1, 9) mit einer geprägten dreidimensional strukturierten Oberfläche (2) in ihrer äußeren Deckschicht, insbesondere für die Innenverkleidung von Kraftfahrzeugen, wobei die Folie in einem formgebenden Verarbeitungsschritt auf einen der Bauteilform entsprechenden Träger aufgebracht wird und dadurch ihre Bauteilform erhält, wobei die Folie auf ihrer unteren und dem Träger zugewandten Unterseite als Schaumfolie ausgebildet ist, **dadurch gekennzeichnet, dass** die Deckschicht als geschäumte Schicht (3, 10) ausgebildet ist und eine über ihre Schichtdicke unterschiedliche und zur Oberfläche ansteigende Schaumdichte (6, 11) aufweist.

2. Thermoplastische Folie nach Anspruch 1, **dadurch gekennzeichnet, dass** die Folie einen einschichtigen Aufbau in Form einer geschäumten Schicht (10) aufweist und die geschäumte Schicht eine über ihre Schichtdicke unterschiedliche und von ihrer Unterseite zur Deckschicht-Oberfläche ansteigende Schaumdichte (11) aufweist.

3. Thermoplastische Folie nach Anspruch 1, **dadurch gekennzeichnet, dass** die Folie aus einer die äußere Deckschicht beinhaltenden Oberfolie (3) und einer geschäumten und auflaminierten Unterfolie (4) besteht, wobei die Oberfolie (3) als geschäumte Schicht ausgebildet ist und eine über ihre Schichtdicke (5) unterschiedliche und zur Deckschicht-Oberfläche ansteigende Schaumdichte (6) aufweist

4. Thermoplastische Folie nach Anspruch 1 bis 3, **dadurch gekennzeichnet, dass** die Folie aus einem thermoplastischen Olefin (TPO) oder einer Polyolefinmischung besteht.

5. Thermoplastische Folie nach Anspruch 1 bis 4, **dadurch gekennzeichnet, dass** die Folie Polypropylen enthält.

6. Thermoplastische Folie nach Anspruch 1 bis 4, **dadurch gekennzeichnet, dass** die Folie Polyethylen enthält, vorzugsweise Polyethylen mit einem Schmelzflussindex von mehr als 2,0 g / 10 Minuten.

7. Thermoplastische Folie nach Anspruch 1 bis 5, **dadurch gekennzeichnet, dass** die Dichte der Deckschicht-Oberfläche vor dem Prägen 100 bis 600 g/l beträgt, vorzugsweise 250 bis 400 g/l.

8. Thermoplastische Folie nach Anspruch 1 bis 6, **dadurch gekennzeichnet, dass** der Gelgehalt der Deckschicht-Oberfläche 20 bis 80 %, vorzugsweise 30 bis 60 % beträgt.

9. Thermoplastische Folie nach Anspruch 1 bis 7, **dadurch gekennzeichnet, dass** die Deckschicht-Oberfläche vor dem Prägeschritt geschlossen-porig ausgebildet ist.

10. Verfahren zur Herstellung einer thermoplastischen Folie mit einer geprägten dreidimensional strukturierten Oberfläche in ihrer äußeren Deckschicht nach Anspruch einem oder mehreren der Ansprüche 1 bis 8, **dadurch gekennzeichnet, dass** das Aufschäumen der Folie oder der Folienschichten, insbesondere der Oberfolie, durch die Zugabe von Treibmitteln und Vernetzungsmitteln während der Extrusion der Folie oder der Folienschichten erfolgt.

11. Verfahren zur Herstellung einer thermoplastischen Folie mit einer geprägten dreidimensional strukturierten Oberfläche in ihrer äußeren Deckschicht nach Anspruch einem oder mehreren der Ansprüche 1 bis 9, **dadurch gekennzeichnet, dass** die Erhöhung der Schaumdichte in der Deckschicht-Oberfläche während des Prägeschrittes erfolgt.

12. Verfahren zur Herstellung einer thermoplastischen Folie mit einer geprägten dreidimensional strukturierten Oberfläche in ihrer äußeren Deckschicht nach Anspruch einem oder mehreren der Ansprüche 3 bis 10, **dadurch gekennzeichnet, dass** das Aufschäumen der Oberfolie durch die Zugabe von Treibmitteln und Vernetzungsmitteln während der Extrusion der Oberfolie und das Auflaminieren der Oberfolie auf die Unterfolie während des Prägeschrittes erfolgt.

13. Verfahren nach Anspruch 10, **dadurch gekennzeichnet, dass** die Unterfolie während des Auflaminierens der Oberfolie bereits in angeschäumter Form vorliegt.

## Claims

1. Thermoplastic sheet (1, 9) with an embossed three-dimensionally structured surface (2) in its exterior outer layer, in particular for the interior cladding of motor vehicles, where the sheet is applied in a shaping step of a process to a support corresponding to the shape of the component, and this gives the sheet its shape of the component, where the sheet takes the form of foam sheet on its lower side and underside facing toward the support, **characterized in that** the outer layer takes the form of foamed layer (3, 10) and has a foam density (6, 11) which varies across its layer thickness and which rises toward the surface.

2. Thermoplastic sheet according to Claim 1, **characterized in that** the sheet has a single-layer structure in the form of a foamed layer (10), and the foamed layer has a foam density (11) which varies across its layer thickness and which rises from its underside toward the surface of the outer layer.

3. Thermoplastic sheet according to Claim 1, **characterized in that** the sheet is composed of an oversheet (3) including the exterior outer layer, and of a foamed undersheet (4) applied by lamination, where the oversheet (3) takes the form of foamed layer and has a foam density (6) which varies across its layer thickness (5) and which rises toward the surface of the outer layer.

4. Thermoplastic sheet according to any of Claims 1 to 3, **characterized in that** the sheet is composed of a thermoplastic olefin (TPO) or of a polyolefin mixture.

5. Thermoplastic sheet according to any of Claims 1 to 4, **characterized in that** the sheet comprises polypropylene.

6. Thermoplastic sheet according to any of Claims 1 to 4, **characterized in that** the sheet comprises polyethylene, preferably polyethylene with a melt flow index of more than 2.0 g/10 minutes.

7. Thermoplastic sheet according to any of Claims 1 to 5, **characterized in that** the density of the surface of the outer layer prior to the embossing process is from 100 to 600 g/l, preferably from 250 to 400 g/l.

8. Thermoplastic sheet according to any of Claims 1 to 6, **characterized in that** the gel content of the surface of the outer layer is from 20 to 80%, preferably from 30 to 60%.

9. Thermoplastic sheet according to any of Claims 1 to 7, **characterized in that** the surface of the outer layer is of closed-pore type, prior to the embossing step.

10. Process for the production of a thermoplastic sheet with an embossed three-dimensionally structured surface in its exterior outer layer, according to one or more of Claims 1 to 8, **characterized in that** the foaming of the sheet or of the layers of the sheet, in particular of the oversheet, takes place via the addition of blowing agents and of crosslinking agents, during the extrusion of the sheet or of the layers of the sheet.

11. Process for the production of a thermoplastic sheet with an embossed three-dimensionally structured surface in its exterior outer layer, according to one or more of Claims 1 to 9, **characterized in that** the increase of the foam density in the surface of the outer layer takes place during the embossing step.

12. Process for the production of a thermoplastic sheet with an embossed three-dimensionally structured surface in its exterior outer layer, according to one or more of Claims 3 to 10, **characterized in that** the foaming of the oversheet takes place via the addition of blowing agents and of crosslinking agents during the extrusion of the oversheet, and the lamination to apply the oversheet to the undersheet takes place during the embossing step.

13. Process according to Claim 10, **characterized in that**, during application of the oversheet by lamination, the undersheet is already present in incipiently foamed form.

## Revendications

1. Film thermoplastique (1, 9) à surface gravée structurée tridimensionnellement (2) sur sa couche de recouvrement extérieure, notamment pour le revêtement intérieur d'automobiles, le film étant appliqué lors d'une étape de traitement de façonnage sur un support correspondant à la forme de l'élément et obtenant ainsi sa forme d'élément, le film étant configuré sous la forme d'un film de mousse sur son côté inférieur et orienté vers le support, **caractérisé en ce que** la couche de recouvrement est configurée sous la forme d'une couche moussée (3, 10) et présente une densité de mousse (6, 11) différente sur son épaisseur de couche et augmentant vers la surface.

2. Film thermoplastique selon la revendication 1, **caractérisé en ce que** le film présente une structure monocouche sous la forme d'une couche moussée (10) et la couche moussée présente une densité de mousse (11) différente sur son épaisseur de couche et augmentant depuis son côté inférieur vers la surface de la couche de recouvrement.

3. Film thermoplastique selon la revendication 1, **caractérisé en ce que** le film est constitué d'un film supérieur (3) contenant la couche de recouvrement extérieure et d'un film inférieur (4) moussé et stratifié, le film supérieur (3) étant configuré sous la forme d'une couche moussée et présentant une densité de mousse (6) différente sur son épaisseur de couche et augmentant vers la surface de la couche de recouvrement.

4. Film thermoplastique selon les revendications 1 à 3, **caractérisé en ce que** le film est constitué d'une oléfine thermoplastique (TPO) ou d'un mélange de polyoléfines.

5. Film thermoplastique selon les revendications 1 à 4, **caractérisé en ce que** le film contient du polypropylène.

6. Film thermoplastique selon les revendications 1 à 4, **caractérisé en ce que** le film contient du polyéthylène, de préférence un polyéthylène ayant un indice de fluidité à chaud supérieur à 2,0 g/10 minutes.

7. Film thermoplastique selon les revendications 1 à 5, **caractérisé en ce que** la densité de la surface de la couche de recouvrement avant la gravure est de 100 à 600 g/l, de préférence de 250 à 400 g/l.

8. Film thermoplastique selon les revendications 1 à 6, **caractérisé en ce que** la teneur en gel de la surface de la couche de recouvrement est de 20 à 80 %, de préférence de 30 à 60 %.

9. Film thermoplastique selon les revendications 1 à 7, **caractérisé en ce que** la surface de la couche de recouvrement est configurée à pores fermés avant l'étape de gravure.

10. Procédé de fabrication d'un film thermoplastique à surface gravée structurée tridimensionnellement sur sa couche de recouvrement extérieure selon une ou plusieurs des revendications 1 à 8, **caractérisé en ce que** le moussage du film ou des couches du film, notamment du film supérieur, a lieu par ajout d'agents gonflants et d'agents de réticulation pendant l'extrusion du film ou des couches du film.

11. Procédé de fabrication d'un film thermoplastique à surface gravée structurée tridimensionnellement sur sa couche de recouvrement extérieure selon une ou plusieurs des revendications 1 à 9, **caractérisé en ce que** l'augmentation de la densité de mousse dans la surface de la couche de recouvrement a lieu pendant l'étape de gravure.

12. Procédé de fabrication d'un film thermoplastique à surface gravée structurée tridimensionnellement sur sa couche de recouvrement extérieure selon une ou plusieurs des revendications 3 à 10, **caractérisé en ce que** le moussage du film supérieur a lieu par ajout d'agents gonflants et d'agents de réticulation pendant l'extrusion du film supérieur et la stratification du film supérieur sur le film inférieur pendant l'étape de gravure.

13. Procédé selon la revendication 10, **caractérisé en ce que** le film inférieur se présente déjà sous forme moussée pendant la stratification du film supérieur.
